# FASCICULE DE BREVET EUROPEEN

(11) **EP 3 848 190 B1**
(45) Date de publication et mention de la délivrance du brevet: **18.05.2022**
(21) Numéro de dépôt: 20205152.0
(22) Date de dépôt: 02.11.2020
(51) Int. Cl.: B29C 73/34, B29C 35/08

(54) **ENVELOPPE A BACHE COLOREE POUR REPARATION DE PANNEAU COMPOSITE ET PROCEDE DE COLORATION ET REPARATION**
SCHUTZHÜLLE MIT EINER GEFÄRBTEN PLANE FÜR DIE REPARATUR VON VERBUNDPLATTEN, UND ENTSPRECHENDES FÄRBE- UND REPARATURVERFAHREN
ENCLOSURE WITH COLOURED CASING FOR REPAIRING COMPOSITE PANEL AND METHOD FOR DYEING AND REPAIR

(30) Priorité: 18.11.2019 FR 1912822
(43) Date de publication de la demande: 14.07.2021
(73) Titulaire: AIRBUS OPERATIONS (S.A.S.), 31060 Toulouse (FR); AIRBUS (S.A.S.), 31700 Blagnac (FR)
(72) Inventeur: CHARLES, Julien, 31700 BLAGNAC (FR); FERRER, Guillaume, 31700 BLAGNAC (FR); DOBIGEON, Franck, 31060 TOULOUSE Cedex 9 (FR); RINCE, Anthony, 31060 TOULOUSE Cedex 9 (FR)
(74) Mandataire: Gicquel, Olivier Yves Gérard

(56) Documents cités:
- DE-A1-102004 062 064
- US-A1- 2013 052 422
- US-A1- 2014 110 887

## Description

La présente invention se rapporte à un outillage et plus particulièrement une bâche utilisée pour réparer un panneau en matériau composite ainsi qu'à un procédé de réparation utilisant une telle bâche. La présente invention concerne également le procédé de coloration de ladite bâche ainsi que le procédé de réparation du panneau.

En cours d'exploitation, des aéronefs peuvent présenter des zones en matériau composite endommagées nécessitant une réparation.

On connait de la demande de brevet FR3039452 un procédé de réparation d'un panneau en matériau composite utilisant une couverture chauffante pour permettre la polymérisation d'une pièce de réparation faite par exemple de nouveaux plis de matériaux composites afin d'obtenir sa fixation sur le panneau. Cependant, la couverture chauffante offre une température plus ou moins homogène sur toute sa surface. Or la température nécessaire à une polymérisation appropriée dépend de la géométrie du panneau comme par exemple de son épaisseur qui peut ne pas être identique sur toute l'étendue de la zone à réparer, ou selon un autre exemple de reliefs, cavités ou autres configurations géométriques conduisant la chaleur à s'évacuer ou s'accumuler tels que la présence de raidisseurs présentant des creux formant des puits de chaleur accumulant la chaleur, ou encore de la présence de matériaux agissant comme des puits de chaleur accumulant la chaleur dans des niches telles que par exemple les alvéoles d'une mousse ou d'un matériau en nid d'abeille ou autres, ou encore de toute autre caractéristique du panneau telle que la température soit différente d'une zone à une autre. Du fait de l'homogénéité de puissance thermique diffusée par la couverture chauffante, les différences de température au niveau du panneau dues à des configurations géométriques particulières conduisent à une polymérisation inhomogène sur toute la surface de la zone à réparer ce qui conduit à une réparation moins résistante.

Le document DE 10 2004 062064 A1 divulgue un ensemble selon le préambule de la revendication 1.

La présente invention a pour but de proposer un outillage permettant de pallier à ces inconvénients et de répartir la température de chauffage du panneau en fonction du besoin de polymérisation au niveau de la zone chauffée concernée.

A cet effet, la présente invention concerne un ensemble d'une enveloppe et d'un panneau en composite présentant une zone endommagée à réparer par polymérisation d'une pièce de réparation à l'aide de l'enveloppe, l'enveloppe comprenant une bâche destinée à être apposée sur le panneau caractérisé en ce que lorsque le panneau et la bâche sont apposés l'un sur l'autre, la bâche présente des zones susceptibles d'absorber une chaleur émise par radiation sur celle-ci dans une proportion dépendant de la température de polymérisation nécessaire au niveau de la zone du panneau en correspondance, les radiations étant absorbées partiellement par une coloration adaptée de la bâche au niveau de la zone en question.

De cette manière, la température de chauffage est répartie sur la surface du panneau en fonction du besoin et n'est plus identique partout. La bâche présente des zones de couleurs différentes correspondant à des zones du panneau correspondantes nécessitant des températures de polymérisation différentes : il en découle une homogénéisation de la polymérisation.

L'invention prévoit au moins l'une des caractéristiques optionnelles suivantes, prises isolément ou en combinaison.

La bâche est thermosensible ou comprend un film thermosensible et présente, lorsqu'elle est soumise à des moyens de chauffage par radiation, des zones de couleurs différentes correspondant à des zones du panneau correspondantes nécessitant des températures de polymérisation différentes.

Les couleurs différentes consistent au moins partiellement en des dégradés de noir et blanc.

Les zones de la bâche destinées à être apposées sur des zones du panneau correspondantes nécessitant une température de polymérisation plus faible présentent des couleurs plus claires et inversement les zones de la bâche destinées à être apposées sur des zones du panneau nécessitant une température de polymérisation plus forte présentent des couleurs plus sombres.

Les couleurs des zones de la bâche ont été obtenues par application de pigments ou colorants.

Les couleurs des zones de la bâche ont été obtenues par impression.

L'enveloppe comprend un revêtement de couleur blanche.

La présente invention concerne également un procédé de coloration de la bâche dudit ensemble présentant les caractéristiques énoncées ci-dessus, caractérisé en ce qu'il comprend les étapes suivantes : - chauffage temporaire par radiation dudit panneau; - détection des températures au moins sur toute la zone endommagée à réparer ; - définition des zones de couleurs différentes en fonction des températures mesurées ; - application des couleurs dans les zones définies.

Selon une alternative, le procédé de coloration de la bâche dudit ensemble se caractérise en ce qu'il comprend les étapes suivantes : - simulation thermique de la zone endommagée à réparer ; - détection des températures au moins sur toute la zone à réparer ; - définition des zones de couleurs différentes en fonction des températures obtenues par simulation ; - application des couleurs dans les zones définies.

L'invention prévoit au moins l'une des caractéristiques optionnelles suivantes, prises isolément ou en combinaison.

L'application des couleurs utilise des pigments ou colorants.

L'application des couleurs est réalisée par impression.

La présente invention concerne également un procédé de réparation d'un panneau d'un ensemble présentant les caractéristiques énoncées ci-dessus utilisant la bâche dudit ensemble, caractérisé en ce qu'il comprend une étape d'application de la bâche sous vide sur le panneau et une étape de chauffage par radiation de ladite bâche par des moyens de chauffage.

Un revêtement de couleur blanche peut être inséré entre la bâche et le panneau.

D'autres buts, caractéristiques et avantages ressortiront de la description de l'invention qui va suivre, description donnée à titre d'exemple uniquement non limitatif, en référence aux dessins ci-annexés dans lesquels :
[Fig. 1] est une vue en perspective d'un panneau endommagé à l'extérieur du fuselage d'un aéronef en réparation sur lequel est accolée une bâche ;
[Fig. 2] est une vue d'un panneau endommagé à l'intérieur du fuselage d'un aéronef en réparation sur lequel est accolée une bâche ;
[Fig. 3] est une vue d'un exemple d'image obtenue par caméra thermique d'un panneau exposé à des moyens de chauffage par radiation, dont les couleurs n'apparaissent qu'avec des dégradés de noir et blanc, les températures les plus froides étant normalement en bleu sur l'image et gris sur la figure et les plus chaudes en rouge sur l'image et noir sur la figure ;
[Fig. 4] est une vue du modèle de zones de couleurs obtenu à partir de l'image thermique de la figure 3 ;
[Fig. 5] est une vue en perspective partielle d'une bâche accolée à un panneau en cours de réparation dans une zone différente de celle de la figure 2.

La présente invention est illustrée dans ce qui suit avec l'exemple d'un panneau 2 de fuselage 4 en composite endommagé d'un aéronef 6. Cependant, elle ne se limite pas à cette application et peut concerner tout type de panneau en composite endommagé d'un aéronef voire même d'un autre véhicule de type automobile, navire, train ou autres, ou encore de tout type d'équipements dans tout type de domaine comme à titre d'exemple l'éolien, le sport, les loisirs ...

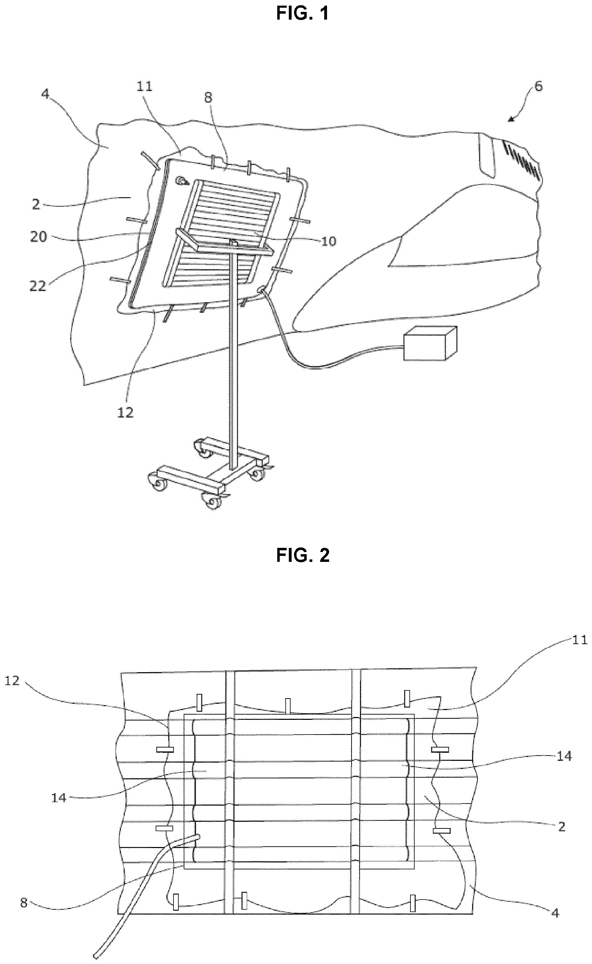

Comme illustré sur la figure 1, le fuselage 4 d'un aéronef comprend un panneau 2 formé d'une peau en composite endommagé sur toute une zone 8, appelée ci-après zone endommagée. La zone 8 apparait dans les figures 1 et 2 en trait plein pour permettre sa visualisation mais cette zone étant sous la bâche, elle n'apparait normalement pas. La zone 8 peut aussi bien se trouver à l'extérieur du fuselage (figure 1) comme à l'intérieur (figure 2), ou bien encore des deux côtés lorsque les dégâts sont traversant. Le terme « panneau » désigne de manière générique tout élément présentant une zone endommagée d'un système plus global qui est dans l'exemple illustré un fuselage d'aéronef. Le panneau 2 est réalisé en matériau composite formé d'au moins des renforts (fibres, particules ...) et une matrice dans laquelle sont noyés les renforts. La matrice concernée dans l'exemple illustré est organique et plus particulièrement une résine polymère. De nombreux procédés de réparation de zone endommagée de panneau composite et en particulier in situ sont connus et ne font pas l'objet de la présente innovation. Ils procèdent par polymérisation d'une pièce de réparation avec le panneau endommagé. Le procédé de réparation de la présente invention utilise des moyens 10 de chauffage par radiation tels que par exemple lampe UV ou à infra-rouge. La plupart des procédés de réparation in situ comme celui illustré par le brevet mentionné plus haut utilise une enveloppe 11 comprenant une bâche 12 pour maintenir la pièce de réparation au niveau de la zone 8 endommagée du panneau pendant le chauffage afin de fixer la pièce sur le panneau par polymérisation de la résine. L'enveloppe 11 est installée sur le panneau (et la pièce de réparation) sous vide pour en renforcer le maintien. Dans certaines formes de réalisation, l'enveloppe 11 se limite à la bâche 12. Dans d'autres formes de réalisation comme il sera vu plus loin, l'enveloppe 11 peut comprendre d'autres composants.

Le concept à la base de l'outillage selon la présente invention consiste à permettre de répartir la chaleur à laquelle est soumis le panneau 2 différemment sur toute la surface de celui-ci en fonction de la température nécessaire pour obtenir une polymérisation homogène de la pièce de réparation avec le panneau et une consolidation de ce fait renforcée. Si la température de polymérisation est trop faible, la polymérisation est insuffisante et la réparation ne résistera pas aux conditions auxquelles est soumis un aéronef. Si la température de polymérisation est trop importante, la résine peut brûler et non seulement la réparation est à reprendre entièrement mais en plus elle peut avoir aggravé les dégâts.

Comme vu précédemment, un panneau 2 n'est en général pas de forme parfaitement parallélépipédique courbe ; souvent, l'épaisseur du panneau 2 varie suivant les contraintes de l'environnement telles que par exemple des charges supplémentaires appliquées localement.

Il se peut aussi que des besoins particuliers comme l'augmentation de la rigidité ou le renforcement de la structure ou encore la filtration du bruit obligent à l'introduction de matériau supplémentaire comme une couche de nid d'abeille qui permet d'améliorer la rigidité ou de filtrer certaines fréquences.

D'autres dispositifs ou systèmes peuvent venir s'ajouter au simple panneau. Ainsi pour en donner un exemple, des raidisseurs 14 (visibles sur la figure 2) peuvent être fixés sur la peau du fuselage. Dans l'exemple illustré sur les figures 1 à 3, le panneau 2 présente des raidisseurs 14 (représentés sur la figure 2). L'enveloppe 11 (et la bâche 12) étant accolée sous vide sur le panneau 2, elle épouse les formes du panneau 2 et comme le montre la figure 2, les reliefs comme ceux formés par les raidisseurs 14 apparaissent sous l'enveloppe 11. Leur forme précise est cachée sur la figure par l'enveloppe 11 mais il s'agit ici de raidisseurs en oméga. A l'intérieur du chapeau en oméga du raidisseur 14, la chaleur s'accumule et la température au niveau des raidisseurs 14 même si elle est appliquée de manière uniforme sur l'ensemble de la surface du panneau est de ce fait plus importante au niveau des raidisseurs. En conséquence, il ne faut pas diffuser une chaleur aussi importante au niveau des raidisseurs que sur le reste de la surface du panneau sinon la chaleur au niveau des raidisseurs peut devenir excessive et conduire aux inconvénients décrits plus hauts.

Il serait donc intéressant de pouvoir adapter la température de la chaleur émise par radiation suivant ce qui est rendu nécessaire par la configuration locale du panneau.

Pour répartir de manière contrôlée la chaleur, l'idée est d'utiliser une chaleur par radiation qui est homogène sur toute la surface de la zone 8 endommagée et de filtrer lesdites radiations dans une proportion déterminée suivant l'endroit précis du panneau sur lequel elles s'appliquent.

Il est connu qu'une partie du rayonnement reçu par un objet est absorbé et converti en énergie thermique. Suivant la matière de l'objet, son aspect superficiel mais également sa couleur, le rayonnement est plus ou moins absorbé/réfléchi. La couleur noire est connue pour absorber les radiations reçues et réchauffer l'objet au contraire de la couleur blanche qui entraine une réflexion importante.

La présente invention consiste à utiliser une bâche 12 présentant des couleurs différentes permettant de ne projeter qu'une proportion déterminée de la chaleur soumise à celle-ci par radiation suivant la couleur en question. La couleur choisie dépend de la proportion filtrée souhaitée de chaleur localement pour obtenir à l'endroit précis exposé du panneau la température nécessaire pour la polymérisation. Il s'en suit un modèle 16 de couleurs pour la bâche 12 propre au panneau 2 à réparer. Les zones 18 de couleurs du modèle 16 sont en complète dépendance avec le panneau 2 à réparer, sa configuration géométrique et ses besoins en température de polymérisation en résultant.

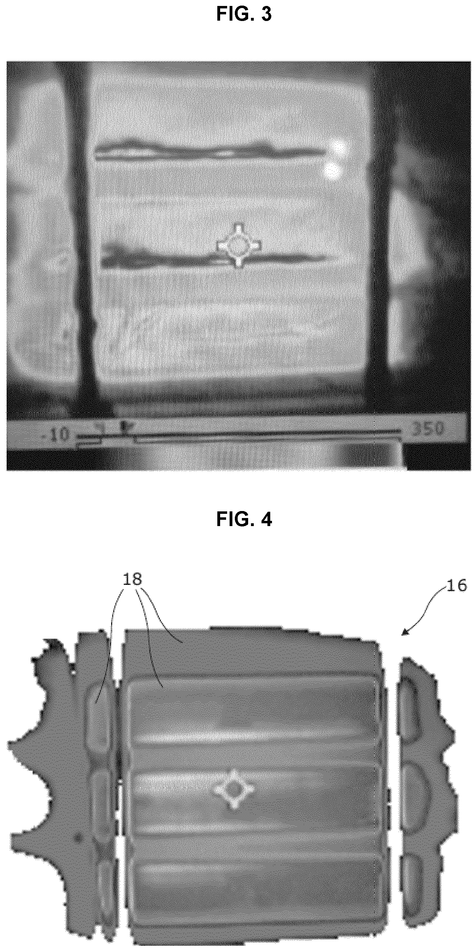

Dans la présente description, le terme couleur désigne une teinte par exemple noir, bleu, rouge ... mais peut aussi désigner une nuance, l'éclat à savoir clair, foncé. Ainsi, selon un exemple particulier, la bâche 12 comporte des zones 18 de couleurs aux teintes variées. Et selon un autre exemple, celui représenté sur la figure 4, la bâche ne comprend que des dégradés de noir et blanc, à savoir des nuances de gris sans autres couleurs : les zones sont plus ou moins foncées ou claires et chaque couleur correspond donc à une nuance de gris (gris clair, gris foncé ...).

Le modèle 16 se base sur le pouvoir de réflexion/absorption de la dite couleur (teinte ou nuance). Ainsi dans un dégradé de noir et blanc, les nuances sombres à savoir proches du noir ou du gris foncé réfléchissent moins la chaleur : elles s'appliquent donc aux zones du panneau plus froides nécessitant d'être réchauffées pour atteindre la température de polymérisation de la résine. A contrario, les nuances claires à savoir proches du gris clair ou du blanc réfléchissent plus la chaleur et elles s'appliquent aux zones du panneau plus chaudes pour ne pas les réchauffer plus que nécessaire.

Le noir considéré comme la nuance la plus sombre n'est pas forcément la couleur la plus efficace pour réchauffer une zone. Ainsi le bleu marine s'avère plus efficace que le noir.

Pour déterminer les zones 18 de couleurs de la bâche 12, il est nécessaire de prendre en considération les polymères, pigments ou autres éléments qui la constituent et qui doivent tenir en température. En d'autres mots, les couleurs que l'on choisit pour la bâche compte-tenu du panneau à réparer ne doivent pas augmenter son pouvoir d'absorption jusqu'à atteindre une température au niveau de la bâche la détériorant compte-tenu de sa constitution.

La bâche est de type connu de l'homme du métier ; elle peut être faite d'un matériau plastique très proche du nylon résistant aux contraintes thermiques et chimiques par exemple d'Ipplon (marque déposée) et plus particulièrement d'IPPLON KM1300 ou de Capran (marque déposée) et plus particulièrement de CAPRAN 980.

Dans la suite de la description, on s'intéresse au procédé de coloration de la bâche et plus précisément les étapes permettant de réaliser les zones 18 de couleur.

Une première méthode pour réaliser les zones 18 consistent dans un premier temps à les déterminer et une fois déterminées à les créer sur la bâche. Une deuxième méthode combine les étapes en une seule à savoir créer les zones simultanément à leur détermination.

Concernant la première méthode, plusieurs formes de réalisation sont possibles pour la détermination comme pour la création des zones.

Une première forme de réalisation pour déterminer les zones de couleurs comprend une étape de détection des températures au niveau du panneau 2 lorsqu'il est soumis à des moyens 10 de chauffage par radiation. A l'aide de l'ensemble des températures détectées, on réalise une cartographie des températures du panneau. A partir de cette cartographie, des zones de couleurs sont dessinées sur la bâche.

Selon un mode particulier de réalisation de la détection des températures, on utilise une caméra thermique (d'autres moyens tels que des sondes en température pourraient satisfaire). Le panneau 2 est chauffé par les moyens 10 de chauffage par radiation pendant une très courte durée juste le temps d'établir la cartographie susmentionnée.

Il est possible également selon une deuxième forme de réalisation de réaliser la cartographie des températures de manière logicielle. De nombreux outils existent aujourd'hui pour simuler le comportement en température d'un panneau en composite. Il suffit donc de réaliser la simulation de l'expérience physique décrite dans la première forme de réalisation à savoir le chauffage du panneau pour obtenir la cartographie souhaitée.

De la cartographie des températures obtenues physiquement dans la première forme de réalisation ou par simulation dans la deuxième forme de réalisation, on en déduit les zones 18 de couleur. La caméra thermique donne une image des zones 18 de couleur comme le montre la figure 3 : l'image réelle est en couleur mais représentée ici en noir et blanc. Ainsi l'image dans les températures les plus basses sont en bleu (gris sur la figure) et rouge dans les températures les plus hautes (noir sur la figure). On voit sur la figure 3 que les températures les plus hautes se trouvent au niveau des raidisseurs comme vu plus haut.

Les zones 18 de couleur déterminées, il s'en suit leur création sur bâche. Selon une forme de réalisation, les couleurs des zones de la bâche peuvent être obtenues par application de pigments ou colorants. Application est pris dans un sens très générique et englobe le dépôt, l'imprégnation ou toute autre action permettant de colorer à l'aide des pigments ou colorants la bâche 12. Un autre exemple d'application donné dans ce qui suit est l'impression qui s'apparente au dépôt. D'autres exemples sont la teinture, la peinture ... Il pourrait être possible également de concevoir la bâche directement avec des zones de couleurs différentes. Il peut Selon une forme de réalisation, la définition du modèle 16 (à savoir les zones 18 de couleur) est saisie dans une imprimante noir et blanc ou couleur suivant le modèle de couleurs tel que représenté sur la figure 4 et la bâche est imprimée.

La coloration de la bâche suivant un modèle de couleurs déterminé pourrait également utiliser la technique de sérigraphie.

Lors de l'impression, des repères 19 de positionnement sont prévus pour permettre une superposition précise de la bâche sur le panneau pour que les zones de couleurs correspondent aux zones du panneau associées. Ces repères peuvent être multiples tels que des hublots, des axes de raidisseurs (axe 19 par exemple sur la figure 2), des limites de panneau (bord 19 comme autre exemple du panneau 2 sur la figure 1), des points de référence ...

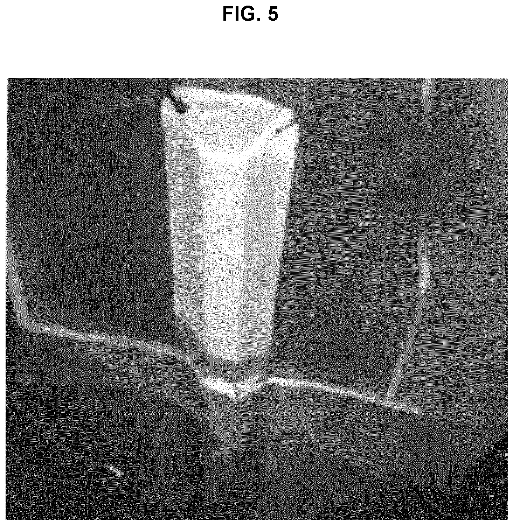

La figure 5 représente de manière partielle une bâche réalisée à partir d'une image obtenue par caméra thermique, en cours d'utilisation. Toutes les zones correspondant aux zones du panneau identifiées comme chaudes par rapport au reste du panneau, à savoir où la température est supérieure à un seuil S1 déterminé par l'opérateur sont colorées en blanc. Dans l'exemple illustré sur la figure 5, il s'agit de la structure creuse que constitue le raidisseur. Toutes les zones correspondant aux zones du panneau identifiées comme froide par rapport au reste du panneau à savoir où la température est inférieure à un seuil S2 déterminé par l'opérateur sont colorées en noir. Comme vu plus haut, avec une imprimante couleur, elles pourraient être colorées en bleu foncé. Toutes les zones du panneau identifiées comme ni chaudes, ni froides, par rapport au reste du panneau, à savoir où la température est supérieure au seuil S2 et inférieure au seuil S1 sont colorées avec des nuances de gris. Dans l'exemple illustré sur la figure 5, il n'y a aucune zone de couleur grise, uniquement noir et blanc.

Comme vu plus haut, il est possible d'utiliser une deuxième méthode permettant de déterminer les zones 18 de couleur et colorer la bâche 12 simultanément. Le procédé de coloration de la bâche consiste à utiliser un film 20 thermosensible dont la couleur change avec la température et dans le cas qui nous intéresse, dont la couleur s'éclaircit lorsque la zone est plus chaude et inversement se fonce lorsque la zone est plus froide. La chaleur émise par la bâche 12 est alors différente suivant les zones 18 de couleur obtenues. Le film 20 est alors soit utilisé comme bâche 12 s'il en a les propriétés suffisantes pour jouer le même rôle, soit superposé à ladite bâche 12. Dans ce dernier cas, le film 20 constitue une couche supplémentaire entre la bâche 12 et le panneau 2 et on considère que le film 20 et la bâche 12 constitue un ensemble désigné de manière générique dans la description par le terme bâche. Cette méthode ne nécessite aucun indicateur de positionnement contrairement à la méthode précédente.

Selon une forme de réalisation particulière de l'invention, l'enveloppe 11 comprend un revêtement 22 de couleur blanche ou claire que l'on superpose à la bâche 12 pour améliorer le contraste de couleurs entre les zones 18. Le revêtement peut être réalisé par exemple en tissu de verre de réparation.

Le procédé de réparation comprend une étape d'installation d'une enveloppe 11 comprenant une bâche 12 colorée comme expliqué précédemment ou susceptible de se colorer (avec ou sans l'adjonction du film 20 thermosensible suivant la forme de réalisation) au moins sur la zone 8 endommagée. La bâche 12 recouvre la pièce de réparation et est reliée de manière étanche au panneau. Les repères 19 de positionnement sur la bâche 12 permettent son centrage par rapport au panneau pour que les zones 18 de la bâche viennent se superposer aux zones correspondantes du panneau (plus particulièrement au niveau de la zone 8 endommagée). Des moyens 10 de chauffage par radiation sont installés de manière à diffuser la chaleur sur toute la surface de la zone 8. Comme le montre l'exemple de la figure 1, des lampes infra-rouge sont installées sur le sol portées par un trépied et mises à la hauteur de la zone 8 de manière à diffuser la chaleur sur toute la surface de celle-ci. Des moyens de mise sous vide de type connu sont activés pour mettre l'enveloppe 11 sous vide et permettre de retirer les gaz présents dans le volume délimité par l'enveloppe et le panneau maintenant ainsi la pièce de réparation avec le panneau 2. La pièce et le panneau ne seront pas décrits plus en détail car ils dépendent du procédé de réparation choisi. Il est possible d'insérer entre la bâche 12 et le panneau 2 le revêtement 22 comme vu plus haut. L'enveloppe 11 comprend alors la bâche 12 et le revêtement 22.

Lorsque les lampes 10 sont allumées, de la chaleur est diffusée par radiation sur l'enveloppe 11 et donc sur la bâche 12. Les radiations sont réfléchies et absorbées suivant une proportion dépendant de la couleur de la zone 18 de la bâche et la polymérisation de la résine est réalisée de manière homogène sur toute la surface de la zone 8 endommagée. Du fait d'obtenir une meilleure répartition des températures au niveau du panneau, la température de polymérisation est homogène sur toute sa surface et les propriétés mécaniques en découlant sont meilleures.

Les moyens de chauffage sont simples et rapides à monter puisqu'ils se limitent à de simples moyens de chauffage par radiation, la bâche étant déjà utilisée dans les procédés de réparation. Le procédé de réparation ne nécessite aucun degré d'expertise. Il n'est plus besoin d'apporter des moyens de chauffage supplémentaires localement tels que de l'air chaud pour les zones du panneau plus froides.

## Revendications

1. Ensemble d'une enveloppe (11) et d'un panneau (2) en composite présentant une zone (8) endommagée à réparer par polymérisation d'une pièce de réparation à l'aide de l'enveloppe (11), l'enveloppe comprenant une bâche (12) destinée à être apposée sur le panneau (2) **caractérisé en ce que** lorsque le panneau (2) et la bâche (12) sont apposés l'un sur l'autre, la bâche (12) présente des zones (18) susceptibles d'absorber une chaleur émise par radiation sur celle-ci dans une proportion dépendant de la température de polymérisation nécessaire au niveau de la zone du panneau (2) en correspondance, les radiations étant absorbées partiellement par une coloration adaptée de la bâche au niveau de la zone (18) en question.

2. Ensemble selon la revendication 1, **caractérisé en ce que** la bâche est thermosensible ou comprend un film thermosensible et présente, lorsqu'elle est soumise à des moyens de chauffage par radiation, des zones de couleurs différentes correspondant à des zones du panneau correspondantes nécessitant des températures de polymérisation différentes.

3. Ensemble selon l'une des revendications 1 ou 2, **caractérisé en ce que** les couleurs différentes consistent au moins partiellement en des dégradés de noir et blanc.

4. Ensemble selon l'une des revendications 1 à 3, **caractérisé en ce que** les zones (18) de la bâche (12) destinées à être apposées sur des zones du panneau correspondantes nécessitant une température de polymérisation plus faible présentent des couleurs plus claires et inversement les zones de la bâche destinées à être apposées sur des zones du panneau nécessitant une température de polymérisation plus forte présentent des couleurs plus sombres.

5. Ensemble selon l'une des revendications 1 à 4, **caractérisé en ce que** les couleurs des zones (18) de la bâche (12) ont été obtenues par application de pigments ou colorants.

6. Ensemble selon l'une des revendications 1 à 5, **caractérisé en ce que** les couleurs des zones (18) de la bâche (12) ont été obtenues par impression.

7. Ensemble selon l'une des revendications 1 à 6, **caractérisé en ce que** l'enveloppe (11) comprend un revêtement (22) de couleur blanche.

8. Procédé de coloration de la bâche dudit ensemble selon l'une des revendications 1 à 7, **caractérisé en ce qu'**il comprend les étapes suivantes : - chauffage temporaire par radiation dudit panneau (2) ; - détection des températures au moins sur toute la zone (8) endommagée à réparer ; - définition des zones (18) de couleurs différentes en fonction des températures mesurées ; - application des couleurs dans les zones (18) définies.

9. Procédé de coloration de la bâche dudit ensemble selon l'une des revendications 1 à 7, **caractérisé en ce qu'**il comprend les étapes suivantes : - simulation thermique de la zone (8) endommagée à réparer ; - détection des températures au moins sur toute la zone à réparer ; - définition des zones (18) de couleurs différentes en fonction des températures obtenues par simulation ; - application des couleurs dans les zones définies.

10. Procédé de coloration de la bâche dudit ensemble selon l'une des revendications 8 ou 9, **caractérisé en ce que** l'application des couleurs utilise des pigments ou colorants.

11. Procédé de coloration de la bâche dudit ensemble selon l'une des revendications 8 à 10, **caractérisé en ce que** l'application des couleurs est réalisée par impression.

12. Procédé de réparation d'un panneau d'un ensemble selon l'une des revendications 1 à 7 utilisant la bâche dudit ensemble, **caractérisé en ce qu'**il comprend une étape d'application de la bâche (12) sous vide sur le panneau (2) et une étape de chauffage par radiation de ladite bâche par des moyens (10) de chauffage.

13. Procédé selon la revendication 12, **caractérisé en ce qu'**un revêtement (22) de couleur blanche est inséré entre la bâche (12) et le panneau (2).

## Patentansprüche

1. Anordnung einer Hülle (11) und einer Platte (2) aus Verbundmaterial mit einem beschädigten Bereich (8), der durch Polymerisierung eines Reparaturteils mithilfe der Hülle (11) zu reparieren ist, wobei die Hülle eine Plane (12) umfasst, die dazu bestimmt ist, auf die Platte (2) aufgebracht zu sein, **dadurch gekennzeichnet, dass**, wenn die Platte (2) und die Plane (12) aufeinander aufgebracht sind, die Plane (12) Bereiche (18) aufweist, die geeignet sind, eine Wärme, die durch Strahlung auf diese abgegeben wird, in einem Anteil zu absorbieren, der von der Polymerisierungstemperatur abhängig ist, die am entsprechenden Bereich der Platte (2) erforderlich ist, wobei die Strahlungen durch eine geeignete Färbung der Plane am betreffenden Bereich (18) teilweise absorbiert werden.

2. Anordnung nach Anspruch 1, **dadurch gekennzeichnet, dass** die Plane wärmeempfindlich ist oder eine wärmeempfindliche Folie umfasst und, wenn sie Strahlungsheizmitteln ausgesetzt ist, Bereiche mit verschiedenen Farben aufweist, die entsprechenden Bereichen der Platte entsprechen, die verschiedene Polymerisierungstemperaturen erfordern.

3. Anordnung nach einem der Ansprüche 1 oder 2, **dadurch gekennzeichnet, dass** die verschiedenen Farben wenigstens teilweise aus Schwarz-Weiß-Abstufungen bestehen.

4. Anordnung nach einem der Ansprüche 1 bis 3, **dadurch gekennzeichnet, dass** die Bereiche (18) der Plane (12), die dazu bestimmt sind, auf entsprechende Bereiche der Platte aufgebracht zu sein, die eine niedrigere Polymerisierungstemperatur erfordern, hellere Farben aufweisen und umgekehrt die Bereiche der Plane, die dazu bestimmt sind, auf Bereiche der Platte aufgebracht zu sein, die eine höhere Polymerisierungstemperatur erfordern, dunklere Farben aufweisen.

5. Anordnung nach einem der Ansprüche 1 bis 4, **dadurch gekennzeichnet, dass** die Farben der Bereiche (18) der Plane (12) durch Auftragung von Pigmenten oder Farbstoffen erhalten wurden.

6. Anordnung nach einem der Ansprüche 1 bis 5, **dadurch gekennzeichnet, dass** die Farben der Bereiche (18) der Plane (12) durch Druck erhalten wurden.

7. Anordnung nach einem der Ansprüche 1 bis 6, **dadurch gekennzeichnet, dass** die Hülle (11) eine Beschichtung (22) weißer Farbe umfasst.

8. Verfahren zur Färbung der Plane der Anordnung nach einem der Ansprüche 1 bis 7, **dadurch gekennzeichnet, dass** es die folgenden Schritte umfasst:
- zeitweises Erwärmen der Platte (2) durch Strahlung;
- Erfassen der Temperaturen wenigstens auf dem gesamten zu reparierenden beschädigten Bereich (8);
- Festlegen der Bereiche (18) mit verschiedenen Farben je nach den gemessenen Temperaturen;
- Auftragen der Farben in den festgelegten Bereichen (18) .

9. Verfahren zur Färbung der Plane der Anordnung nach einem der Ansprüche 1 bis 7, **dadurch gekennzeichnet, dass** es die folgenden Schritte umfasst:
- Wärmesimulation des zu reparierenden beschädigten Bereichs (8);
- Erfassen der Temperaturen wenigstens auf dem gesamten zu reparierenden Bereich;
- Festlegen der Bereiche (18) mit verschiedenen Farben je nach den Temperaturen, die durch Simulation erhalten wurden;
- Auftragen der Farben in den festgelegten Bereichen.

10. Verfahren zur Färbung der Plane der Anordnung nach einem der Ansprüche 8 oder 9, **dadurch gekennzeichnet, dass** beim Auftragen der Farben Pigmente oder Farbstoffe verwendet werden.

11. Verfahren zur Färbung der Plane der Anordnung nach einem der Ansprüche 8 bis 10, **dadurch gekennzeichnet, dass** das Auftragen der Farben durch Druck erfolgt.

12. Verfahren zur Reparatur einer Platte einer Anordnung nach einem der Ansprüche 1 bis 7, wobei die Plane der Anordnung verwendet wird, **dadurch gekennzeichnet, dass** es einen Schritt des Auftragens der Plane (12) im Vakuum auf die Platte (2) und einen Schritt des Erwärmens der Plane durch Strahlung mithilfe von Heizmitteln (10) umfasst.

13. Verfahren nach Anspruch 12, **dadurch gekennzeichnet, dass** eine Beschichtung (22) weißer Farbe zwischen die Plane (12) und die Platte (2) eingefügt ist.

## Claims

1. Assembly of a bag (11) and of a composite panel (2) exhibiting a damaged region (8) to be repaired by polymerization of a repair piece using the bag (11), the bag comprising a sheet (12) intended to be laid over the panel (2), **characterized in that** when the panel (2) and the sheet (12) are laid one atop of the other, the sheet (12) exhibits regions (18) capable of absorbing heat emitted by radiation onto it in a proportion that is dependent on the polymerization temperature needed for that region of the panel (2) that corresponds to it, the radiation being partially absorbed by suitable colouration of the sheet in the region (18) concerned.

2. Assembly according to Claim 1, **characterized in that** the sheet is heat sensitive or comprises a heat sensitive film and, when subjected to means of heating by radiation, exhibits regions of different colours corresponding to corresponding regions of the panel that require different polymerization temperatures.

3. Assembly according to one of Claims 1 and 2, **characterized in that** the different colours at least partially consist of part-tones of black and white.

4. Assembly according to one of Claims 1 to 3, **characterized in that** those regions (18) of the sheet (12) that are intended to be laid over corresponding regions of the panel that require a lower polymerization temperature exhibit lighter colours and conversely those regions of the sheet that are intended to be laid over regions of the panel that require a higher polymerization temperature exhibit darker colours.

5. Assembly according to one of Claims 1 to 4, **characterized in that** the colours of the regions (18) of the sheet (12) have been obtained by the application of pigments or colourants.

6. Assembly according to one of Claims 1 to 5, **characterized in that** the colours of the regions (18) of the sheet (12) have been obtained by printing.

7. Assembly according to one of Claims 1 to 6, **characterized in that** the bag (11) comprises a covering (22) that is white in colour.

8. Method for colouring the sheet of the said assembly according to one of Claims 1 to 7, **characterized in that** it comprises the following steps: - temporary heating of the said panel (2) by radiation; - detection of the temperatures at least over the entire damaged region (8) to be repaired; - definition of the regions (18) of different colours according to the temperatures measured; - application of the colours in the defined regions (18).

9. Method for colouring the sheet of the said assembly according to one of Claims 1 to 7, **characterized in that** it comprises the following steps: - thermal simulation of the damaged region (8) to be repaired; - detection of the temperatures at least over the entire region to be repaired; - definition of the regions (18) of different colours according to the temperatures obtained by simulation; - application of the colours in the defined regions.

10. Method for colouring the sheet of the said assembly according to one of Claims 8 and 9, **characterized in that** the application of the colours employs pigments or colorants.

11. Method for colouring the sheet of the said assembly according to one of Claims 8 to 10, **characterized in that** the application of the colours is performed using printing.

12. Method for repairing a panel of an assembly according to one of Claims 1 to 7 using the sheet of the said assembly, **characterized in that** it comprises a step of applying the sheet (12) under vacuum to the panel (2) and a step of heating the said sheet by radiation using heating means (10).

13. Method according to Claim 12, **characterized in that** a covering (22) that is white in colour is inserted between the sheet (12) and the panel (2).
